Europäisches Patentamt

**European Patent Office**

**Office européen des brevets**

(19)

(11) Publication number: **0 354 600 B1**

## EUROPEAN PATENT SPECIFICATION

(12)

(45) Date of publication of patent specification: **08.09.93** (51) Int. Cl.5: **A23D 9/00**, A23D 7/00

(21) Application number: **89200363.3**

(22) Date of filing: **15.02.89**

(54) **Edible fat-containing product and process for preparing same.**

(30) Priority: **11.08.88 US 231118**

(43) Date of publication of application:
**14.02.90 Bulletin 90/07**

(45) Publication of the grant of the patent:
**08.09.93 Bulletin 93/36**

(84) Designated Contracting States:
**AT BE CH DE ES FR GB GR IT LI NL SE**

(56) References cited:
EP-A- 0 290 065      EP-A- 0 290 216
EP-A- 0 290 421      EP-A- 0 304 131
GB-A- 207 545        US-A- 4 005 196

(73) Proprietor: **UNILEVER N.V.**
**Weena 455**
**NL-3013 AL Rotterdam(NL)**

(84) Designated Contracting States:
**BE CH DE ES FR GR IT LI NL SE AT**

(73) Proprietor: **UNILEVER PLC**
**Unilever House Blackfriars P.O. Box 68**
**London EC4P 4BO(GB)**

(84) Designated Contracting States:
**GB**

(72) Inventor: **Bruin, Solke**
**Vossenlaan 11**
**NL-6705 Wageningen(NL)**

(74) Representative: **Mulder, Cornelis Willem**
**Reinier, Dr. et al**
**UNILEVER N.V. Patent Division P.O. Box 137**
**NL-3130 AC Vlaardingen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

## Description

The invention relates to edible fat-containing products comprising indigestible polyol fatty acid polyesters. In particular, although not exclusively, the invention relates to such products of the emulsion type, such as margarine, dressings, ice cream, cheese and low-fat spreads. It is to be observed that the term emulsion as used throughout this application also encompasses compositions of the dispersion-type. The invention further relates to processes for the preparation of such products.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body. Accordingly, it is attractive to replace at least part of the fat in edible fat-containing products by polyol fatty acid polyesters.

Edible fat-containing products comprising indigestible polyol fatty acid polyesters are known in the art, and described in eg U.S. Pat. Nos. 3,600,186, 4,005,195, 4,005,196, 4,034,083 and EP Pat. Publ. Nos. 0 233 856, 0 236 288, and 0 235 836.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used sugar polyol is sucrose.

In this specification the term 'polyol fatty acid polyester' is intended to refer to any such polyesters or mixtures thereof of which, on an average, more than 70 % of the polyol hydroxyl groups have been esterified with fatty acids.

In this specification by 'indigestible' is meant that at least about 70 % by weight of the material concerned is not digested by the human body.

In US 4,034,083 it is reported that the consumption of diets containing sucrose polyesters interferes with the absorption of vitamins A and E. This undesirable phenomenon, according to US 4,034,083, may be overcome by fortifying the sucrose polyester type polyesters with fat-soluble vitamins. In the examples of US 4,034,083 edible fat containing products are described which are prepared by combining vitaminized polyol fatty acid polyesters with non-vitaminized digestible fat.

We have found now that the negative influence of indigestible polyol fatty acid polyester on the adsorption of an oil-soluble vitamin containing product, may be overcome in a very effective manner by concentrating such an oil-soluble vitamin in a distinct fat phase essentially consisting of digestible fat, said distinct fat phase being separated from another fat phase containing indigestible polyol fatty acid residues by a third phase which is essentially impervious to said oil-soluble vitamins. Thus in a first aspect the present invention is concerned with an edible fat-containing product comprising two distinct fat phases (A) and (B); fat phase (A) comprising indigestible polyol fatty acid polyesters and fat phase (B) essentially consisting of digestible fat, wherein fat phase (B) contains an oil-soluble vitamin at a concentration level that is at least twice as high as the concentration level of said vitamin in fat phase (A) and in which fat phase (A) and fat phase (B) are separated from each other by a third phase which is essentially impervious to the oil-soluble vitamin.

The term 'distinct phase' is used throughout this application to indicate that such a phase is identifiable as such upon analysis of the product. Thus at a microscopic or larger scale a distinct fat phase must be recognizable, i.e. a particular discrete part of the product should have the same composition as said fat phase, whereas the remainder should have a substantially different composition. The presence of distinct fat phases may easily be established if said phases have a clearly different appearance as in that case the

2

different fat phases are distinctly perceptible to the eye, be it that a microscope may be required to determine this. Preferably the products according to the invention, at a macroscopical scale, are essentially homogeneous.

In a preferred embodiment of the present invention fat phase (B) contains an oil-soluble vitamin at a concentration level that is at least 5 times, preferably at least 10 times as high as the concentration level of said vitamin in fat phase (A). It is to be understood that the present invention also encompasses products in which the fat phase (B) contains an oil-soluble vitamin and fat phase (A) contains no such oil-soluble vitamin at all. In such case fat phase (B) contains infinitely more, i.e. more than 5 times as much oil-soluble vitamin than fat phase (A). In general the present product will contain at least 0.01 ppm of an oil-soluble vitamin, calculated on the total fat content. Preferably the product will contain at least 0.1 ppm, more preferably from 1 to 1000 ppm, most preferably 5-800 ppm oil-soluble vitamin, calculated on total fat.

The benefits of the present invention are particularly appreciated in products wherein a significant part of the fat is composed of indigestible polyol fatty acid polyester. Thus, preferably, fat phase (A) constitutes at least 25 wt.% and fat phase (B) constitutes at least 5 wt.% of the total fat present in the product. More preferably fat phase (A) constitutes from 50-90 wt.% and phase (B) constitutes from 7-50 wt.% of the total fat. The edible fat-containing products according to the invention preferably contain at least 5 wt.% fat. The present invention encompasses food products like spreads, cheese, meat emulsions, mayonnaise, chocolates, dressings and ice cream. The present invention is particularly concerned with food products that in their normal use, prior to consumption, are not subjected to temperatures exceeding 37 °C. Examples of such products are spreads, ice cream, meat emulsions, cheese, mayonnaise and chocolates.

The third phase comprised by the present product may suitably consist of a polar liquid, preferably selected from the group consisting of water, alcohol and mixtures thereof, or alternatively of a gas, preferably air. An example of a product according to the present invention containing a third gaseous phase are chocolate strands and Parmesan cheese wherein one part of the grains contains fat phase (A) and the remainder of the particles contains fat phase (B).

In a preferred embodiment of the present invention the oil-soluble vitamin is vitamin E (tocopherol). More preferably the oil-soluble vitamin is vitamin E and the third phase consists of an aqueous phase. Since the latter vitamin is extremely insoluble in water, the vitamin will only diffuse from the digestible fat phase (B) to fat phase (A) at an extremely low rate and thus the vitamin E will remain concentrated in fat phase (B). Most preferably the oil-soluble vitamin is alpha tocopherol the intake of which vitamin is essential for human beings.

The present product may suitably comprise up till 95 wt.% water, preferably from 5-90 wt.% water. Most preferably the present product is a water-and-oil emulsion containing from 10-80 wt.% water. Here the term water-and-oil emulsion encompasses emulsions containing a continuous oil phase as well emulsions containing a continuous aqueous phase. Also bi-continuous emulsions containing both a continuous aqueous and a continuous oil phase are covered by the term water-and-oil emulsion. Preferably the present product comprises a dispersed oil phase. According to one embodiment such a product is a oil-in-water-in-oil-emulsion comprising a continuous fat phase and an aqueous phase containing a dispersed fat phase, wherein the continuous fat phase is formed by fat phase (A) and the dispersed fat phase is formed by fat phase (B) or vice versa. According to another embodiment the product comprises an oil-in-water emulsion including a continuous aqueous phase containing two dispersed fat phases of different composition, one formed by fat phase (A), the other formed by fat phase (B).

Examples of food products according to the invention of the oil-in-water-in-oil type are spreads and chocolates. Examples of food products as encompassed by the present invention of the oil-in-water type are spreads, dressings, mayonnaise, ice cream and cheese.

The digestible fat phase (B) may suitably comprise digestible fatty components such as triglycerides, diglycerides or monoglycerides. Preferably fat phase (B) is mainly composed of triglycerides, more preferably fat phase (B) essentially consists of triglycerides.

In yet another preferred embodiment of the present invention the product comprises a hardstock that contains a substantial amount of high melting indigestible polyol fatty acid polyesters. In this specification by 'hardstock' is meant that part of the fat composition characterized by a slip melting point of above 36 °C. The slip melting point is defined as the temperature at which the amount of solid phase in the melting fat has become so low that an air bubble is forced upwards in an open capillary filled with the fat. Preferably the indigestible polyol fatty acid polyesters of fat phase (A) constitute more than 50 wt.% , more preferably at least 80 wt.% of the hardstock.

The hardstock polyol fatty acid polyesters may be the only polyesters present but they may also constitute part of a mixture of polyol fatty acid polyesters or a polyester blend.

The total amount of hardstock in the products of the invention preferably is at least 5 % calculated by weight of the total amount of fat. More preferably the amount of hardstock lies above 20%, the range of 30 to 60 % being most preferred.

By variation of the particular blend of fatty acid residues used in the synthesis the melting point of the polyol fatty acid polyesters can be influenced. More saturated and/or long-chain fatty acid residues result in a higher melting point than unsaturated and/or short-chain fatty acid residues. The slip melting point of the hardstock polyol fatty acid polyesters preferably lies within the range of from 37 to 55°C, in particular of from 37 to 45°C.

Suitable polyol fatty acid polyesters have been defined in chemical terms hereinbefore. Preferably, polyol fatty acid polyesters derived from sugars or sugar alcohols are applied, and in particular, sugar fatty acid polyesters derived from disaccharides, such as sucrose. Very suitable have been found sugar fatty acid polyesters of which at least 50 % of the fatty acid residues are derived from saturated fatty acids, in particular saturated $C_8$-$C_{22}$ fatty acid. Sucrose polyesters of which at least 70 % of the fatty acid residues are derived from $C_{12}$-$C_{18}$ fatty acids, are preferred.

In general fatty acids per se or naturally occurring fats and oils may be used as a source for the fatty acid residues in the polyol fatty acid polyesters. Conventional techniques may be used to introduce, if necessary, the required degree of saturation. Suitable such techniques include full or partial hydrogenation, interesterification, transesterification and fractionation, and may be used before or after conversion of the polyols to polyol fatty acid polyesters.

Suitably polyol fatty acid polyesters are used which are completely or partly derived from transhydrogenated triglycerides or the corresponding lower alkylesters thereof, as described in EP 0 235 836. Alternatively, the desired level of trans fatty acid residues may also be introduced by first converting to the polyol fatty acid polyester and subsequent transhydrogenation.

As defined hereinbefore polyol fatty acid polyesters may be applied of which, on an average, more than 70 % of the polyol hydroxyl groups have been esterified with fatty acids. Preferably polyol fatty acid polyesters are used with higher degrees of conversion, in particular polyol fatty acid polyesters of which, on an average, more than 85 % or even over 95 % of the polyol hydroxyl groups have been esterified with fatty acids.

In addition to the hardstock fat the products of the invention generally comprise conventional oils and fats which may be of both animal and vegetable origin. Suitable conventional triglyceride fats and oils include, optionally partially hydrogenated, coconut oil, palmkernel oil, palm oil, marine oils, lard, tallow fat, butter fat, cocoa butter fat, soybean oil, safflower oil, cotton seed oil, rapeseed oil, corn oil sunflower oil and mixtures thereof. Of these oils sunflower oil is preferred.

The non-hardstock part of the overall fat composition may also comprise indigestible oils, such as liquid polyol fatty acid polyesters. Suitably liquid polyol fatty acid polyesters, i.e. having slip melting points below 36°C, can be used to partially replace the non-hardstock part of the fat composition. Also, instead of separate hardstock and non-hardstock polyol fatty acid polyester fractions, polyol fatty acid polyesters which comprise both hardstock and non-hardstock fractions may be advantageously used.

It has been well recognised that fat-containing products containing relatively large amounts of digestible polyunsaturated fatty acid residues are attractive for their cholesterol-lowering effect. Such products are in particular those in which the fatty acid residues in the digestible part of the fat composition comprise a maximum of 35 % of saturated fatty acid residues. A useful characteristic to scale fat-containing products for their cholesterol-lowering effect is the ratio of polyunsaturated to saturated fatty acid residues (in this context only fatty acid residues in digestible fats are considered). The higher this ratio, the stronger the cholesterol-lowering effect. Since linoleic acid is the most important polyunsaturated fatty acid, instead of the above ratio in practice the ratio of linoleic acid to saturated fatty acid residues (LA/SFA ratio) can be used.

Products in which in particular the conventional saturated fat fraction (i.e. the conventional hardstock) is fully or partially replaced by indigestible polyol fatty acid polyesters having characteristics similar to the conventional hardstock fat fraction, allow an appreciable and desirable increment in the LA/SFA ratio. In the products according to the invention LA/SFA ratios are achieved of over 5, such as 6 to 8. If so desired, LA/SFA ratios can be achieved of over 10.

In general the fat product of the invention has an overall $N_{40}$ below 10, more preferably it has an $N_{35}$ below 10 and an $N_{20}$ below 30, preferably between 8 and 25. The N-values are representative of the solid fat content and are measured by using the NMR method as described in Journal of American Oil Chemists' Society, 51 (1974), 316 by Van Putte et al.

Another aspect of the present invention is a process for the preparation of an edible fat-containing product, comprising combining a first fat containing fraction of which the fat essentially consists of digestible fat and which first fraction contains an oil-soluble vitamin, with a second fraction containing indigestible polyol fatty acid polyesters, wherein the concentration level of the oil-soluble vitamin in the digestible fat of the first fraction is at least twice as high as in the polyol fatty acid polyesters of the second fraction, and subjecting the combined fractions to such mild processing conditions that the final product comprises the fat of the first and the fat of the second fraction in the form of two distinct fat phases.

The term combining as used here implies more than simply bringing together the two fractions. The combination of the two fractions should be carried out in such a manner that, at a macroscopical scale, the resulting edible fat-containing product is essentially homogeneous. On the other hand, as indicated above, the combining of the two fractions should be effected under such mild processing conditions that the two fractions remain distinguishable in the final product. Here by mild processing conditions is meant that the combined fractions are not subjected to conditions of high shear, certainly not for a substantial period of time, and furthermore that the temperature is kept relatively low. The processing temperature, after combining the two fractions, preferably is adjusted to and maintained at below 35°C, more preferably below 30°C.

In a preferred embodiment of the present invention the process comprises the incorporation of a fluid material that is insoluble in oil and impervious to the oil-soluble vitamin, under such mild processing conditions that the product of the process contains the fat originating from the first fraction in the form a distinct fat phase essentially completely separated from another distinct fat phase originating from the second fraction by the fluid material.

Suitably in the present process the first digestible fat containing fraction is combined with the second fraction in such a proportion that the resulting weight ratio of digestible fat to indigestible polyol fatty acid polyesters ranges from 1:20 to 1:1. Indeed the benefits of the present process are particularly appreciated if the first fraction in which the oil-soluble vitamin is concentrated is combined with a second fraction comprising the major part of the fat in the final product. Thus preferably the first fraction is combined with the second fraction in such a proportion that the resulting weight ratio of digestible fat to indigestible polyol fatty acid polyesters ranges from 1:15 to 1:3.

The first and second fat-containing fraction may consist of granular material, for instance in case each fat containing fraction is composed of cheese or chocolate grains that are mixed together, but they may also consist of a water-in-oil or oil-in-water emulsion.

In a preferred embodiment of the process according to the present invention at least one of the two fractions to be combined consists of an oil-in-water emulsion and the fractions are admixed under such conditions that the product obtained is an emulsion containing an aqueous phase comprising a dispersed fat phase. Preferably the present process comprises combining a first fraction consisting of oil or an oil-and-water emulsion with a second fraction consisting of an oil-in-water emulsion. In the products so obtained, the digestible fat containing a relatively high amount of an oil-soluble vitamin is separated from the dispersed fat phase containing indigestible fatty acid by the aqueous phase, which aqueous phase acts as a barrier, preventing diffusion of the oil-soluble vitamin from the digestible fat to the indigestible polyol fatty acid polyesters.

In a preferred embodiment of the present process, the first fraction contains at least 20 wt.% digestible fat and the second fraction contains from 20-80 wt.% indigestible polyol fatty acid polyesters and from 80-20 wt.% aqueous phase.

According to a more preferred aspect of the present invention the process comprises combining a first fraction containing more than 30 wt.% digestible fat with the second fraction and cooling and working the emulsion so obtained under such conditions that an oil-in-water-in-oil emulsion is obtained. According to another more preferred aspect of the present invention the process comprises admixing a first fraction consisting of an oil-in-water emulsion to a second fraction consisting of an oil-in-water emulsion in such proportions that an oil-in-water emulsion is obtained containing from 5-90 wt.%, in particular from 20-85 wt.% fat.

The present process is advantageously employed in the preparation of edible fat-containing products of the water-and-oil emulsion type, which products are suitably prepared by subjecting to cooling and/or working. Thus, in a preferred aspect of the process according to the invention, said process includes the incorporation of from 10-85 wt.% water, cooling and/or working. The cooling and working may be effected by employing devices known in the art of spread manufacture such as: Votators ™, crystallizers, cavity transfer mixers, cooling coils, static mixers and resting tubes provided with a wire screen.

The invention is now further illustrated with reference to the following examples.

5

Example 1

Two oil-in-water emulsions containing 30% by weight fat were prepared from the following ingredients:

| Ingredients | Concentration in wt.% |
|---|---|
| Fat | 30.0 |
| Water | 22.6 |
| Sucrose | 18.0 |
| Maltvinegar (10% acetic acid) | 15.0 |
| Mustard | 6.0 |
| Stabilized egg yolk (Code 92-8 ex. Enthoven, the Netherlands) | 4.0 |
| Salt | 1.5 |
| Snowflake 06308 (ex. CPC) | 1.0 |
| Colflow 67 (ex. National Starch) | 1.0 |
| Tween 60 (ex. Merck) | 0.3 |
| Beta carotene (0.4% in sunflower oil) | 0.2 |
| Onion powder | 0.2 |
| Xanthan gum | 0.1 |
| Potassium sorbate | 0.1 |
| Locust bean gum | 0.07 |
| Pepper oil | 0.03 |

A first oil-in-water emulsion was prepared by first mixing 80% of the water with locust bean gum and starch, heating to 85°C and adding the egg yolk, mustard, pepper oil, onion powder. Subsequently a mixture is added, which mixture was obtained by mixing the rest of the water with sugar, salt and the vinegar. Eventually the fat consisting of sunflower oil containing 0.055 wt.% alpha-tocopherol was added to the mixture, together with the Tween 60 and beta carotene. The mixture was maintained at a temperature of 85°C for 5 minutes and then cooled down to 60°C after which it was homogenized in a single step over a Manton Gaulin ™ high pressure homogenizer (pressure drop 75 bar).

The above procedure was repeated except that instead of the sunflower oil containing tocopherol, a blend was utilized consisting of sucrose polyesters of fatty acids derived from fully hardened soybean oil having a slip melting point of 65°C (55%), and touch-hardened soybean oil having a slip melting point of 28°C (45%), the sucrose polyesters being esterified to a degree of 95 %.

Both oil-in-water emulsions were viewed under a light microscope using a combination of bright field and linearly polarized contrast. The images of the sunflower oil based emulsion and the sucrose polyester based emulsion, as seen trough the microscope, were photographed and are represented in respectively Photograph 1 and Photograph 2.

The above two oil-in-water emulsions were mixed in a 1:1 weight ratio under low shear. The dressing so obtained was of good quality and was also examined under the light microscope and photographed. The picture so obtained is represented as Photograph 3 and shows distinct fat droplets in a continuous aqueous system, part of which droplets, as may be derived from the comparison with Photographs 1 and 2, are oil-droplets consisting of sunflower oil and part of which droplets appear to consist of sucrose polyester. The lighter colour of the oil droplets consisting of sucrose polyester can be explained from the fact that the dressing was examined at ambient temperature at which temperature the sucrose polyester blend contains a substantial amount of solid fat. Even when the examination was repeated after 5 weeks the image of the product when put under a microscope had not significantly changed.

Example 2

Example 1 was repeated with the exception that the sucrose polyester blend used in the second oil-in-water emulsion consisted of sucrose polyesters of fatty acids derived from fully hardened soybean oil having a slip melting point 65°C (62%), and touch-hardened soybean oil having a slip melting point 28°C (38%), the sucrose polyesters being esterified to a degree of 95 %. Again the dressing so obtained was of good quality.

Examples 3 and 4

Two spreads of the oil-in-water-in-oil emulsion-type, containing 80% by weight fat, were prepared by blending a fat blend containing indigestible polyol fatty acid polyesters with a cream containing a dispersed fat phase consisting of triglycerides.

The fat blend used had the following composition:

| Ingredient | wt.% of final product |
|---|---|
| Sucrose fatty acid polyester (fatty acid residues derived from touch-hardened soybean oil, slip melting point 28°C; degree of esterification over 95 %) | 4.0 |
| Sucrose fatty acid polyester (fatty acid residues derived from 55 % fully hardened soybean oil, slip melting point 65°C, and 45 % touch-hardened soybean oil, slip melting point 28°C; degree of esterification over 95 %) | 16.0 |
| Partially hardened soybean oil (Slip melting point 36°C) | 9.0 |
| Sunflower oil | 11.0 |
| Hymono 8903 [1] (ex. Quest Int., Netherlands) | 0.2 |
| Beta carotene (0.4%) | 0.1 |

1. Monoglyceride composition

Two spread products were prepared by mixing the above fat blend with two oil-in-water emulsions of different composition, namely cream A and cream B. The respective composition of Cream A and B was as follows:

| Ingredient (in wt.% of final product) | Cream A | Cream B |
|---|---|---|
| Sunflower oil | | 40.0 |
| Butter fat | 40.0 | |
| Alpha tocopherol | 0.011 | 0.011 |
| Sodium caseinate | 2.5 | 2.5 |
| Gelatin | 0.3 | 0.3 |
| Salt | 0.2 | 0.2 |
| Water | 16.7 | 16.7 |

Cream A and Cream B were prepared by slowly adding the fat phase (to which the sodium caseinate and alpha tocopherol had been added previously) of the final cream to the aqueous phase (to which the gelatin and salt had been added) while mixing with an Ultra Turrax ™ mixing device. Both the fat phase and the aqueous phase had a temperature of about 70°C upon admixture. The pre-emulsion so obtained was homogenized by recirculating during 6 minutes through a two-stage Rannie ™ homogenizer in which the pressure drop across each stage was 6 bar.

Creams A and B were blended with the fat blend described above by adding said creams, having a temperature of 60°C, to the fat blend, also having a temperature of 60°C, in a vessel while stirring. The composition so obtained was then fed through a scraped surface heat exchanger (Votator ™) at a flow rate of 4 kg/hr. The heat exchanger was operated at 1000 rpm and the product stream leaving the device was filled into tubs. The exit temperature of the product made with Cream A was 10°C and had a solids content (calculated on product) as measured by NMR of 10%. The exit temperature of the product made with Cream B was 5.5°C and had a solids content of 4%.

Both products so obtained were found to be of a good quality. The product prepared with cream B was examined under a light microscope using bright field contrast and photographed. The picture so obtained is represented as Photograph 4 and shows a continuous fat phase containing dispersed aqueous droplets which again contain dispersed fat droplets.

Examples 5-7

Three spreads of the oil-in-water-in-oil emulsion-type, containing 40% by weight fat, were prepared by blending a water-in-oil emulsion containing indigestible polyol fatty acid polyesters with a cream containing a dispersed fat phase consisting of triglycerides.

The water-in-oil emulsion used had the following composition:

| Ingredient | wt.% of the emulsion |
|---|---|
| Sucrose fatty acid polyester (fatty acid residues derived from touch-hardened soybean oil, slip melting point 28°C; degree of esterification over 95 %) | 4.0 |
| Sucrose fatty acid polyester (fatty acid residues derived from 55 % fully hardened soybean oil, slip melting point 65°C, and 45 % touch-hardened soybean oil, slip melting point 28°C; degree of esterification over 95 %) | 16.0 |
| Partially hardened soybean oil (Slip melting point 36°C) | 9.0 |
| Sunflower oil | 11.0 |
| Hymono 8903 | 0.2 |
| Bolec ZTD (lecithin ex. Unimills, Hamburg, F.R.G.) | 0.2 |
| Beta carotene (0.4%) | 0.1 |
| Sodium caseinate | 3.0 |
| Gelatin | 2.0 |
| Carboxymethylcellulose 7MF (ex. Hercules Inc. Wilmington, U.S.A.) | 0.1 |
| Salt | 0.2 |
| Potassium Sorbate | 0.16 |
| Water | 54.0 |

The water-in-oil emulsion was prepared as follows: Monoglycerides, lecithin, sodium caseinate and beta carotene were added to the fat. Carboxymethylcellulose, gelatin, salt and potassium sorbate were added to hot tap water (60°C) while stirring with an Ultra Turrax ™ mixing device and subsequently pasteurized by heating for 10 minutes at 80°C. The aqueous phase was then cooled down to 40°C and the pH was adjusted with a mixture of citric and lactic acid (4:1) to 5.1. The aqueous phase was put into a vessel and held at 45°C and the fat phase having a temperature of about 42°C was added slowly to the aqueous phase while stirring.

The oil-in-water emulsion so obtained was inverted to a water-in-oil emulsion by passing the emulsion through a process line (previously flushed with oil) containing a scraped surface heat exchanger (Votator ™) and a crystallizer (C-unit). The oil-in-water emulsion having a temperature of 45°C was passed through the heat exchanger rotating at 500 rpm and on leaving the heat exchanger had a solid fat content of 0% and a temperature of 11°C. After the heat exchanger the emulsion was directly fed to the crystallizer, rotating at 1500 rpm and left the crystallizer as a water-in-oil emulsion having a temperature of 26°C and a solid fat content of about 2%. The water-in-oil emulsion was subsequently combined with a cream in a weight ratio of 7:3 and further processed through yet another scraped surface heat exchanger (Votator ™).

The creams that were combined with the water-in-oil emulsion had essentially the same composition as the water-in-oil emulsion described in this example above, except that:

(a) the fat consisted of butter fat (Cream A), soybean oil hardened to a slip melting point of 36°C (Cream B) or sunflower oil (Cream C); and

(b) the fat contained 0.064 wt.% alpha-tocopherol.

The creams were prepared in the same manner as described in Examples 3 and 4 on the understanding that the monoglycerides, lecithin, beta carotene, sodium caseinate and alpha tocopherol were added to the fat phase and the other ingredients to the aqueous phase. Before being combined with the water-in-oil emulsion the creams were passed through a scraped surface heat exchanger (Votator ™) operated at 300 rpm and left the heat exchanger while having a temperature of 20°C and a solid fat content of essentially 0%.

The combined water-in-oil and oil-in-water streams were directly fed to and passed through a scraped surface heat exchanger (Votator ™) rotating at 500 rpm and left the heat exchanger having a temperature of about 13°C. The products containing butterfat or sunflower oil upon leaving the heat exchanger had a solid fat content of about 3% whereas the product containing hardened soybean oil had a solid fat content of about 6%.

All three products were found to be stable, easy spreadable and did not loose water on spreading. The appearance of the products was very similar to that of conventional low fat spreads.

In order to establish the amount of fat present in the internal fat phase and the amount of fat forming the continuous fat phase, the three products were heated to 40°C and centrifuged at 3000 rpm in a centrifuge type RC2B ex. Ivan Sorvall Inc., after which fat and cream were separated.

In case of the product prepared with Cream A the amount of cream separated constituted 69 wt.% of the original product. For Creams B and C the respective figures of 8 and 10 wt.% were found. Thus it can be concluded that no substantial confluence of the two fat phases had occurred during processing.

## Claims

1. Edible fat-containing product comprising two distinct fat phases (A) and (B); fat phase (A) comprising indigestible polyol fatty acid polyesters and fat phase (B) essentially consisting of digestible fat, wherein fat phase (B) contains an oil-soluble vitamin at a concentration level that is at least twice as high as the concentration level of said vitamin in fat phase (A) and in which fat phase (A) and fat phase (B) are separated from each other by a third phase which is essentially impervious to the oil-soluble vitamin.

2. Product according to claim 1, characterized in that fat phase (B) contains an oil-soluble vitamin at a concentration level that is at least 5 times, preferably at least 10 times as high as the concentration level of said vitamin in fat phase (A).

3. Product according to claim 1 or 2, characterized in that fat phase (A) constitutes at least 25 wt.% and fat phase (B) constitutes at least 5 wt.% of the total fat present in the product.

4. Product according to any one of claims 1-3, characterized in that the oil-soluble vitamin is vitamin E and the third phase consists of an aqueous phase.

5. Product according to any one of claims 1-4, characterized in that the product comprises a hardstock of which the indigestible polyol fatty acid polyesters of fat phase (A) constitute more than 50%, more preferably at least 80% by weight.

6. Product according to any one of claims 1-5, characterized in that the product is a water-and-oil emulsion containing 10-80 wt.% water and a dispersed fat phase which is formed by either fat phase (A) or (B).

**7.** Product according to any one of claims 1-6, characterized in that the product comprises an oil-in-water emulsion including a continuous aqueous phase containing two dispersed fat phases of different composition, one formed by fat phase (A), the other formed by fat phase (B).

**8.** Process for the preparation of an edible fat-containing product, comprising combining a first fat containing fraction of which the fat essentially consists of digestible fat and which first fraction contains an oil-soluble vitamin, with a second fraction containing indigestible polyol fatty acid polyesters, wherein the concentration level of the oil-soluble vitamin in the digestible fat of the first fraction is at least twice as high as in the polyol fatty acid polyesters of the second fraction, and subjecting the combined fractions to such mild processing conditions that the final product comprises the fat of the first and the fat of the second fraction in the form of two distinct fat phases.

**9.** Process according to claim 8, characterized in that at least one of the two fractions to be combined consists of an oil-in-water emulsion and the fractions are admixed under such conditions that the product obtained is an emulsion containing an aqueous phase comprising a dispersed fat phase.

**10.** Process according to claim 8 or 9, characterized in that the first fraction is combined with the second fraction in such a proportion that the resulting weight ratio of digestible fat to indigestible polyol fatty acid polyesters ranges from 1:20 to 1:1.

**Patentansprüche**

**1.** Eßbares, Fett enthaltendes Produkt, das zwei deutliche Fettphasen (A) und (B) umfaßt, wobei die Fettphase (A) unverdauliche Polyolfettsäurepolyester umfaßt und die Fettphase (B) im wesentlichen aus verdaulichem Fett besteht, worin die Fettphase (B) ein öllösliches Vitamin in einer Konzentration enthält, die mindestens zweimal so hoch wie die Konzentration dieses Vitamins in der Fettphase (A) ist, und worin die Fettphase (A) und die Fettphase (B) durch eine dritte Phase, die für das öllösliche Vitamin im wesentlichen unundurchlässig ist, voneinander getrennt sind.

**2.** Produkt nach Anspruch 1, dadurch gekennzeichnet, daß die Fettphase (B) ein öllösliches Vitamin in einer Konzentration enthält, die mindestens fünfmal, vorzugsweise mindestens zehnmal, höher als die Konzentration dieses Vitamins in der Fettphase (A) ist.

**3.** Produkt nach Anspruch 1 oder 2, dadurch gekennzeichnet, daß die Fettphase (A) mindestens 25 Gew.-% und die Fettphase (B) mindestens 5 Gew.-% des im Produkt vorliegenden Gesamtfettes beträgt.

**4.** Produkt nach irgendeinem der Ansprüche 1 bis 3, dadurch gekennzeichnet, daß das öllösliche Vitamin Vitamin E ist und die dritte Phase aus einer wäßrigen Phase besteht.

**5.** Produkt nach irgendeinem der Ansprüche 1 bis 4, dadurch gekennzeichnet, daß das Produkt eine hochschmelzende Fettkomponente umfaßt, von der die unverdaulichen Polyolfettsäurepolyester der Fettphase (A) mehr als 50 Gew.-%, vorzugsweise mindestens 80 Gew.-%, betragen.

**6.** Produkt nach irgendeinem der Ansprüche 1 bis 5, dadurch gekennzeichnet, daß das Produkt eine Wasser-und-Öl-Emulsion ist, die 10 bis 80 Gew.-% Wasser und eine dispergierte Fettphase enthält, die entweder durch die Fettphase (A) oder (B) gebildet ist.

**7.** Produkt nach irgendeinem der Ansprüche 1 bis 6, dadurch gekennzeichnet, daß das Produkt eine Öl-in-Wasser-Emulsion umfaßt, die eine kontinuierliche wäßrige Phase einschließt, die zwei dispergierte Fettphasen unterschiedlicher Zusammensetzung enthält, von denen eine durch die Fettphase (A) und die andere durch die Fettphase (B) gebildet ist.

**8.** Verfahren zur Herstellung eines eßbaren, Fett enthaltenden Produktes, das umfaßt das Kombinieren einer ersten fetthaltigen Fraktion, deren Fett im wesentlichen aus verdaulichem Fett besteht und die ein öllösliches Vitamin enthält, mit einer zweiten Fraktion, die unverdauliche Polyolfettsäurepolyester enthält, worin die Konzentration des öllöslichen Vitamins im verdaulichen Fett der ersten Fraktion mindestens zweimal so hoch wie in den Polyolfettsäurepolyestern der zweiten Fraktion ist, und das Unterwerfen der kombinierten Fraktionen unter solche milden Bearbeitungsbedingungen, daß das Endprodukt das Fett der ersten und das Fett der zweiten Fraktion in Form von zwei deutlichen Fettphasen umfaßt.

9. Verfahren nach Anspruch 8, dadurch gekennzeichnet, daß mindestens eine der beiden zu kombinierenden Fraktionen aus einer Öl-in-Wasser-Emulsion besteht und die Fraktionen unter solchen Bedingungen gemischt werden, daß das erhaltene Produkt eine Emulsion ist, die eine wäßrige Phase enthält, die eine dispergierte Fettphase umfaßt.

10. Verfahren nach Anspruch 8 oder 9, dadurch gekennzeichnet, daß die erste Fraktion mit der zweiten Fraktion in einem solchen Verhältnis kombiniert wird, daß das erhaltene Gewichtsverhältnis von verdaulichem Fett zu unverdaulichen Polyolfettsäurepolyestern im Bereich von 1:20 bis 1:1 liegt.

**Revendications**

1. Composition contenant de la graisse alimentaire comprenant deux phases grasses distinctes (A) et (B) ; la phase grasse (A) comprenant des polyesters d'acide gras et de polyol et la phase grasse (B) étant essentiellement composée de graisse digestible, dans laquelle la phase grasse (B) contient une vitamine soluble dans l'huile à un niveau de concentration qui est au moins deux fois supérieur au niveau de concentration de ladite vitamine dans la phase grasse (A) et dans laquelle la phase grasse (A) et la phase grasse (B) sont séparées l'une de l'autre par une troisième phase qui est essentiellement imperméable à la vitamine soluble dans l'huile.

2. La composition selon la revendication 1, caractérisée en ce que la phase grasse (B) contient une vitamine soluble dans l'huile à un niveau de concentration qui est au moins 5 fois, de préférence au moins 10 fois supérieur au niveau de concentration de ladite vitamine dans la phase grasse (A).

3. La composition selon la revendication 1 ou 2, caractérisée en ce que la phase grasse (A) constitue au moins 25 % en masse, et la phase grasse (B) constitue au moins 5 % en masse de la graisse totale présente dans la composition.

4. La composition selon l'une des revendications 1 à 3, caractérisée en ce que la vitamine soluble dans l'huile est de la vitamine E et en ce que la troisième phase est composée d'une phase aqueuse.

5. La composition selon l'une des revendications 1 à 4, caractérisée en ce que la composition comprend une matière grasse dans laquelle les polyesters d'acide gras et de polyol de la phase grasse (A) constituent plus de 50 %, de façon plus préférentielle au moins 80 % en masse.

6. La composition selon l'une des revendications 1 à 5, caractérisée en ce que la composition est une émulsion eau dans l'huile contenant 10 - 80 % en masse d'eau et une phase grasse qui est formée soit par la phase grasse (A), soit par la phase grasse (B).

7. La composition selon l'une des revendications 1 - 6, caractérisée en ce que la composition comprend une émulsion huile dans l'eau comprenant une phase aqueuse contenant deux phases grasses dispersées ayant des compositions différentes, l'une étant formée par la phase grasse (A), l'autre étant formée par la phase grasse (B).

8. Procédé pour la préparation d'une composition contenant de la graisse alimentaire, comprenant les étapes consistant à combiner une première fraction contenant de la graisse dans laquelle la graisse est essentiellement composée de graisse digestible et ladite première fraction contenant une vitamine soluble dans l'huile, avec une seconde fraction contenant des polyesters d'acide gras et de polyol non digestibles, dans lequel le niveau de concentration de la vitamine soluble dans l'huile dans la graisse digestible de la première fraction est au moins deux fois supérieur à celui des polyesters d'acide gras et de polyol de la seconde fraction, et consistant à soumettre les fractions combinées à des conditions de traitement douces telles que la composition finale comprend la graisse de la première fraction et la graisse de la seconde fraction sous la forme de deux phases distinctes.

9. Le procédé selon la revendication 8, caractérisé en ce qu'au moins l'une des deux fractions devant être combinées est composée d'une émulsion huile dans l'eau et en ce que les fractions sont mélangées dans des conditions telles que la composition obtenue est une émulsion contenant une phase aqueuse comprenant une phase grasse dispersée.

10. La procédé selon la revendication 8 ou la revendication 9, caractérisé en ce que la première fraction est combinée avec la seconde fraction dans une proportion telle que le rapport en masse qui en résulte entre graisse digestible et polyesters d'acide gras et de polyol non digestibles est compris entre 1 pour 20 et 1 pour 1.